# EUROPEAN PATENT SPECIFICATION

(11) **EP 1 956 303 B1**
(45) Date of publication and mention of the grant of the patent: **28.07.2010**
(21) Application number: 08150929.1
(22) Date of filing: 01.02.2008
(51) Int. Cl.: F24D 13/02, H05B 3/26

(54) **Infrared electrothermal raised floor piece and floor comprising the same**
Elektrothermisches angehobnes Infrarotbodenteil und Boden damit
Pièce de plancher surélevé électrothermique à infrarouges et plancher doté de celle-ci

(30) Priority: 01.02.2007 CN 200710026658
(43) Date of publication of application: 13.08.2008
(73) Proprietor: Fu, Xiaole, Guangzhou Economic Development Zone Guangzhou, Guangdong 510-730 (CN)
(72) Inventor: Fu, Xiaole, Guangzhou Economic Development Zone Guangzhou, Guangdong 510-730 (CN)
(74) Representative: Korga, Leokadia

(56) References cited:
- EP-A- 1 429 080
- JP-A- 2005 194 740
- JP-A- 2005 220 565
- JP-A- 2007 010 304
- US-A- 5 004 895

## Description

The invention relates to a floor piece and a floor comprising the same, and particularly to an infrared electrothermal raised floor piece and an infrared electrothermal raised floor comprising the same.

Conventionally, various heating equipments, such as coal stoves, coal-fired boilers, oil-fired boiler, gas-fired boiler, electric heaters and air-conditioners are widely used. However, disadvantages of the coal stoves and boilers comprise complex structure, huge volume, inconvenient adjustment of temperature, high power consumption and high pollution. As for the electric heaters and the air-conditioners, although they are convenient for temperature adjustment, low heat efficiency, high electricity consumption, small heat radiating area, occupation of limited indoor space are non-neglectable problems to be solved, moreover, many people feel uncomfortable since heat is provided via air convection.

From EP 1 429 080 A1 knows is an electric floor heating system capable of preventing low-temperature burn comprising an electric floor heating panel and a floor material placed thereon. The floor material is formed by laminating integrally an upper material forming the floor surface, a heat diffusing material disposed below the upper material horizontally to the floor surface, and a lower material whose lower surface contacts the panel. The floor material is so constructed that the contacting surface temperature of the human body is kept at 42°C or below. However, since the heating panel is placed under the floor material and there are no insulating layers or structures disposed below it, the tile is inefficient.

In addition, China patent number 01248023.1 disclosed an infrared electrothermal floor comprising a plurality of calcium silicate cement guard plate and a carbon fiber infrared heat component disposed therebetween. This kind of floor realizes convenient adjustment of temperature, low power consumption and environmental protection, needs no fuel, saves indoor space, and is capable of supplying heat from a sole of a foot to the indoor space.

However, there are some problems with the above-mentioned floor: firstly, the floor is laid along with electric wire to facilitate integral forming, which causes great difficulty in construction and low efficiency, moreover, once the floor is damaged, it is difficult to fix and maintain, and dangerous electric leakage often takes place. Secondly, the carbon fiber infrared heat component is not efficiently utilized since it is embedded under the bottom of the calcium silicate cement guard plate, which severely affects penetrability of infrared ray, and leads to attenuation in thermal infrared radiation and loss of health functions. Thirdly, the floor is globally electrified, and it is impossible to flexibly implement local control of electricity as required, which causes unnecessary heat loss and influences energy-saving effect. Fourthly, the floor is disposable, once failure occurs, the floor as a whole will be damaged, which causes high using cost and environmental pollution. Fifthly, a top of the floor is only a cement guard plate, and a decoration layer needs to be laid on the bottom thereof, which increases a thickness of the floor and brings about extra burden to a user. Finally, due to attenuation in thermal infrared radiation and slow heat conduction, temperature rise of the floor is very slow and time-consuming, which decreases heat efficiency and influences heating effect.

In view of the above-described problems, it is one objective of the invention to provide an infrared electrothermal raised floor piece that is environment-friendly, power saving, convenient for maintenance, easy for laying, cost-effective, safe, reliable and comfortable, and features with good infrared health protection effect, free global/local control of temperature and fast temperature rise.

Another objective of the invention is to provide an infrared electrothermal raised floor that is environment-friendly, power saving, convenient for maintenance, easy for laying, cost-effective, safe, reliable and comfortable, and features with good infrared health protection effect, free global/local control of temperature and fast temperature rise.

To achieve the above objectives, in accordance with one embodiment of the invention, provided is an infrared electrothermal raised floor piece with the features of claim 1. Optional features are disclosed in the dependent claims.

Advantages of the invention are as follows:

Comfortable heating supply

The invention implements low-power and large-area heating supply in a manner of low-temperature radiation instead of air heating, and prevents drying and dust caused by convective heating supply. Heat radiates and dissipates from the ground and acts on a sole and a body of a user, and makes the user feel comfortable and relaxed. A mechanism of the low-temperature radiation is to make human body and indoor objects absorb energy first, and temperature thereof will rise, and then to make them radiate energy, and indoor temperature will uniformly rise. In this situation, actual temperature of human body is higher than air temperature, and thus the user may feel warm and comfortable. Moreover, all rooms are equipped with independent temperature controllers, users are capable of adjusting indoor temperature as required, and thus personalized requirement of the users are realized.

Healthy heating supply

In a power-on state, the floor of the invention generates far-infrared light wave with a wavelength centralized between 6 to 16µm, so as to cause human deep cells to moderately resonate. If a user stays in this environment for a long period of time, his human microcirculation will be improved, metabolism will be promoted, cell vitality will be strengthened and nervous and endocrine systems will be adjusted. Moreover, the invention is also capable of promoting blood flow to smooth meridians and collaterals and improving human immunity.

Safe heating supply

The floor of the invention uses materials with good insulation characteristics, a surface resistance and a volume resistance of the floor are greater than 1MΩ, and electrical breakdown strength thereof is greater than 500V, which make the floor very safe and reliable. Even if electric leakage occurs in use, there will be no electric shock accident.

Environment-protection heating supply

The floor of the invention does not generate noise during operation. By using electricity as a clean energy, air pollution caused by traditional boilers is prevented. By way of electron impact and friction heat, high light or electromagnetic pollution is not generated.

Economic and energy saving

Since an electric heat conversion rate of the floor of the invention is above 99% and heating materials are close to the surface of the floor, heat may be adequately dissipated to a room. Average power consumption of the floor is 15-25W/ m2 (architectural area). By way of an intelligent temperature controller, the floor is capable of switching on or off heating at any time in divided periods or rooms, or common movable raised floors may be used in certain unnecessary places, thus operation cost will be significantly reduced.

Convenient installation

The floor of the invention is easy and convenient for installation. Since heating materials are integrated with the floor, heating and decoration effects are reached after construction, and thus cumbersome processes caused by separated construction of heating resources and floorings are eliminated. An installation process of the floor of the invention is the same as that of a common movable raised floor except for connection of electric appliances and wires.

Fast heating

2-3 minutes after being powered on, the floor begins heating and heat is quickly dissipated into a room. In cold weather, when people go home, they do not need to wait and will feel warm soon.

Space saving and reduced construction cost

The floor of the invention integrates a heating function with a decoration function and traditional flues and radiators are no longer needed, which increases usable are of a room, makes the room easy for decoration and reduces cost spent on decoration. Meanwhile, since no heating facility (such as a boiler or a pipe) is used, a storey height of a building can be decreased by 5-6 cm, and thus construction cost is correspondingly reduced.

The invention will be described below in conjunction with accompanying drawings.

Fig. 1 is a schematic view of an infrared electrothermal raised floor of the invention;

Fig. 2 is a schematic view of an infrared electrothermal raised floor piece (with a seal) of the invention;

Fig. 3 is a partial sectional view of an infrared electrothermal raised floor piece of the invention; and

Fig. 4 illustrates electric parallel connection between infrared electrothermal raised floor pieces of the invention.

Detailed description will be given below with reference to accompanying drawings.

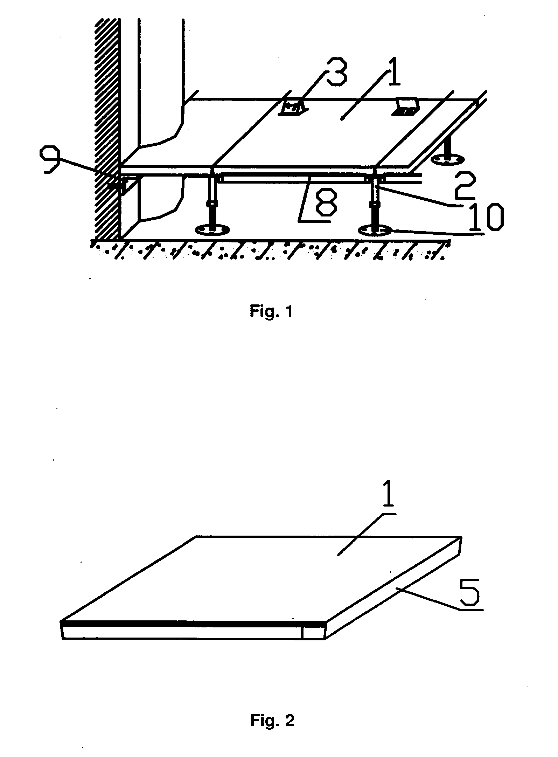

As shown in Figs. 1 and 2, in a first embodiment of the invention, an infrared electrothermal raised floor comprises tens of infrared electrothermal raised floor pieces 1 and a supporter 2. The infrared electrothermal raised floor pieces 1 are transversely or lengthwisely disposed on the supporter 2. The supporter 2 comprises a cross beam 8, a longitudinal beam 9 and a supporting pedestal 10. The cross beam 8 and the longitudinal beam 9 are transversely interconnected with each other, and the supporting pedestal 10 is capable of changing a supporting height.

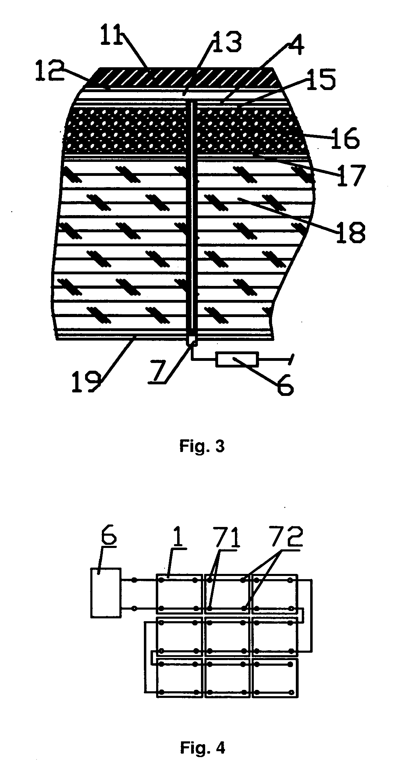

As shown in Figs. 2 and 3, from top to bottom, the infrared electrothermal raised floor piece 1 comprises a faceplate layer 11, a carbon fiber far-infrared heat layer 13, a force support structure layer 18 and a plurality of power line connection terminals 7.

The faceplate layer 11 is a fireproof decorative faceplate or a wood plate fixed on the carbon fiber far-infrared heat layer 13 via an adhesive layer 12. Alternatively, compound carpet may be laid on the faceplate layer 11.

The force support structure layer 18 is a calcium sulfate plate, a wood fiber plate or a combination thereof.

The power line connection terminal 7 is fixed at the bottom of the infrared electrothermal raised floor piece 1.

A plurality of electrodes 4 are disposed on one side of the carbon fiber far-infrared heat layer 13 opposite to the insulation support structure layer 16. In this embodiment, two pairs of electrodes 4 are used. It should be noted that in other embodiment, one or more pairs of electrodes 4 are possible. The power line connection terminal 7 is led out of the infrared electrothermal raised floor piece 1 via the electrode 4, and connected to an external power supply via a temperature adjustment and control device 6. In this embodiment, the temperature adjustment and control device 6 is a well-known temperature controller.

As shown in Fig. 4, the power line connection terminals 7 comprise a pair of power line inlet connection terminals 71 and a pair of power line outlet connection terminals 72, and the infrared electrothermal raised floor pieces 1 are electrically-connected with each other via the power line inlet connection terminals 71 and the power line outlet connection terminals 72, which realizes time-saving, labor-saving and convenient installation and repairing.

A socket 3 is disposed on the infrared electrothermal raised floor piece 1.

In a second embodiment of the invention, an insulation support structure layer 16 is disposed between the force support structure layer 18 and the carbon fiber far-infrared heat layer 13, and is fixed on the force support structure layer 18 via a connection layer 17. A protection layer 19 is disposed at the bottom of the force support structure layer 18.

A far-infrared reflection layer 15 is disposed between the carbon fiber far-infrared heat layer 13 and the insulation support structure layer 16, so as to prevent heat from radiating towards the ground.

In a third embodiment of the invention, a seal 5 is disposed around the infrared electrothermal raised floor piece 1. The faceplate layer 11, the seal 5 and the protection layer 19 are made of anti-electrostatic PVC materials.

## Claims

1. An infrared electrothermal raised floor piece (1) comprising a faceplate layer (11); a heat layer (13) located below the faceplate layer (11); a force support structure layer (18); a plurality of electrodes (4) connected to the heat layer (13); and a plurality of power line connection terminals (7) connected to the electrodes (4); the faceplate layer being (11) a decorative top layer, the heat layer (13) being made of carbon-fiber far-infrared emitting material; the force support structure layer (18) being located below the heat layer (13); **characterised in that** the floor piece is installed on a support structure (2), the support structure comprising a cross beam (8), a longitudinal beam (9), and a supporting pedestal (10).

2. The infrared electrothermal raised floor piece of claim 1, **characterized in that** said force support structure layer (18) is a calcium sulfate plate, a wood fiber plate or a combination thereof.

3. The infrared electrothermal raised floor piece of claim 1 or 2, **characterized in that** an insulation support structure layer (16) is disposed between said force support structure layer (18) and said carbon fiber far-infrared heat layer (13); said insulation support structure layer (16) is fixed on said force support structure layer (18) via a connection layer (17); and said electrode (4) is disposed on a side of said carbon fiber far-infrared heat layer (13) opposite to said insulation support structure layer (16).

4. The infrared electrothermal raised floor piece of claim 3, **characterized in that** a far-infrared reflection layer (15) is disposed between said carbon fiber far-infrared heat layer (13) and said insulation support structure layer (16).

5. The infrared electrothermal raised floor piece of any of the preceding claims, **characterized in that** said face plate layer is a fireproof decorative faceplate or a wood plate fixed on said carbon fiber far-infrared heat layer (13) via an adhesive layer (12).

6. The infrared electrothermal raised floor piece of any of the preceding claims, **characterized in that** a protection layer (19) is disposed at the bottom of said force support structure layer (18).

7. The infrared electrothermal raised floor piece of claim 6, **characterized in that** a seal (5) is disposed around said infrared electrothermal raised floor piece (1); and said faceplate layer (11), said seal (5) and said protection layer (19) are made of anti-electrostatic materials.

8. The infrared electrothermal raised floor piece of any of the preceding claims, **characterized in that** said power line connection terminal (7) is connected to an external power supply via a temperature adjustment and control device (6); and a power socket (3) is disposed on the infrared electrothermal raised floor piece (1).

9. The infrared electrothermal raised floor piece of any of the preceding claims, **characterized in that** said power line connection terminals (7) comprise a pair of power line inlet connection terminals (71) and a pair of power line outlet connection terminals (72).

10. An infrared electrothermal raised floor comprising a plurality of infrared electrothermal raised floor pieces (1) of any of the preceding claims, **characterized in that** said infrared electrothermal raised floor pieces (1) are connected to each other via said power line inlet connection terminals (71) and said power line outlet connection terminals (72).

11. An infrared electrothermal raised floor comprising a plurality of infrared electrothermal raised floor pieces (1) of any of the preceding claims, **characterized in that** the floor is raised and installed on a support structure (2), the support structure comprising a cross beam (8), a longitudinal beam (9), and a supporting pedestal (10)

## Patentansprüche

1. Infrarot-elektrothermisches Doppelbodenstück (1), umfassend eine Abdeckplattenschicht (11); eine unter der Abdeckplattenschicht (11) befindliche Wärmeschicht (13); eine Krafttragaufbauschicht (18), mehrere Elektroden (4), die mit der Wärmeschicht (13) verbunden sind; und mehrere Stromleitungsanschlussklemmen (7), die mit den Elektroden (4) verbunden sind; wobei die Abdeckplattenschicht (11) eine dekorative obere Schicht ist, die Wärmeschicht (13) aus einem Ferninfrarot ausstrahlenden Kohlefasermaterial besteht; und die Krafttragaufbauschicht (18) unter der Wärmeschicht (13) angeordnet ist; **dadurch gekennzeichnet, dass** das Bodenstück an einem Tragaufbau (2) montiert ist, und der Tragaufbau einen Querbalken (8), einen Längsbalken (9) und ein Traggestell (10) umfasst.

2. Infrarot-elektrothermisches Doppelbodenstück nach Anspruch 1, **dadurch gekennzeichnet, dass** die Krafttragaufbauschicht (18) eine Calciumsulfatplatte, eine Holzfaserplatte oder eine Kombination davon ist.

3. Infrarot-elektrothermisches Doppelbodenstück nach Anspruch 1 oder 2, **dadurch gekennzeichnet, dass** zwischen der Krafttragaufbauschicht (18) und der Ferninfrarot-Kohlefaserwärmeschicht (13) eine Isolierungstragaufbauschicht (16) angeordnet ist; wobei die Isolierungstragaufbauschicht (16) über eine Verbindungsschicht (17) an der Krafttragaufbauschicht (18) fixiert ist; und die Elektrode (4) an einer Seite der Ferninfrarot-Kohlefaserwärmeschicht (13) angeordnet ist, die zur Isolierungstragaufbauschicht (16) entgegengesetzt ist.

4. Infrarot-elektrothermisches Doppelbodenstück nach Anspruch 3, **dadurch gekennzeichnet, dass** zwischen der Ferninfrarot-Kohlefaserwärmeschicht (13) und der Isolierungstragaufbauschicht (16) eine Ferninfrarotreflexionsschicht (15) angeordnet ist.

5. Infrarot-elektrothermisches Doppelbodenstück nach einem der vorhergehenden Ansprüche, **dadurch gekennzeichnet, dass** die Abdeckplattenschicht eine feuerbeständige dekorative Abdeckplatte oder eine Holzplatte ist, die über eine Klebeschicht (12) an der Ferninfrarot-Kohlefaserwärmeschicht (13) fixiert ist.

6. Infrarot-elektrothermisches Doppelbodenstück nach einem der vorhergehenden Ansprüche, **dadurch gekennzeichnet, dass** an der Unterseite der Krafttragaufbauschicht (18) eine Schutzschicht (19) angeordnet ist.

7. Infrarot-elektrothermisches Doppelbodenstück nach Anspruch 6, **dadurch gekennzeichnet, dass** um das infrarot-elektrothermische Doppelbodenstück (1) eine Dichtung (5) angeordnet ist; und die Abdeckplattenschicht (11), die Dichtung (5) und die Schutzschicht (19) aus antielektrostatischen Materialien bestehen.

8. Infrarot-elektrothermisches Doppelbodenstück nach einem der vorhergehenden Ansprüche, **dadurch gekennzeichnet, dass** die Stromleitungsanschlussklemme (7) über eine Temperaturregel- und Steuervorrichtung (6) an eine externe Stromversorgung angeschlossen ist; und am infrarot-elektrothermischen Doppelbodenstück (1) eine Steckdose (3) angeordnet ist.

9. Infrarot-elektrothermisches Doppelbodenstück nach einem der vorhergehenden Ansprüche, **dadurch gekennzeichnet, dass** die Stromleitungsanschlussklemmen (7) ein Paar von Stromleitungseingangsanschlussklemmen (71) und ein Paar von Stromleitungsausgangsanschlussklemmen (72) umfassen.

10. Infrarot-elektrothermischer Doppelboden, umfassend mehrere infrarot-elektrothermische Doppelbodenstücke (1) nach einem der vorhergehenden Ansprüche, **dadurch gekennzeichnet, dass** die infrarot-elektrothermischen Doppelbodenstücke (1) über die Stromleitungseingangsanschlussklemmen (71) und die Stromleitungsausgangsanschlussklemmen (72) miteinander verbunden sind.

11. Infrarot-elektrothermischer Doppelboden, umfassend mehrere infrarot-elektrothermische Doppelbodenstücke (1) nach einem der vorhergehenden Ansprüche, **dadurch gekennzeichnet, dass** der Boden erhöht und an einem Tragaufbau (2) montiert ist, wobei der Tragaufbau einen Querbalken (8), einen Längsbalken (9) und ein Traggestell (10) umfasst.

## Revendications

1. Pièce de plancher surélevé électrothermique à infrarouges (1) comprenant une couche de plateau (11) ; une couche chauffante (13) située en dessous de la couche de plateau (11) ; une couche de structure de support à force (18) ; une pluralité d'électrodes (4) connectées à la couche chauffante (13) ; et une pluralité de bornes (7) de connexion à une ligne d'alimentation électrique connectées aux électrodes (4) ; la couche de plateau (11) étant une couche de sommet décorative, la couche chauffante (13) étant constituée d'un matériau émetteur d'infrarouges lointains en fibre de carbone ; la couche de structure de support à force (18) étant située en dessous de la couche chauffante (13) ; **caractérisée en ce que** la pièce de plancher est installée sur une structure de support (2), la structure de support comprenant une traverse (8), une poutrelle longitudinale (9) et un piédestal de support (10) ?

2. Pièce de plancher surélevé électrothermique à infrarouges selon la revendication 1, **caractérisé en ce que** ladite couche de structure de support à force (18) est une plaque de sulfate de calcium, une plate de fibre de cellulose ou une combinaison de celles-ci.

3. Pièce de plancher surélevé électrothermique à infrarouges selon la revendication 1 ou 2,
**caractérisé en ce que** une couche de structure de support d'isolation (16) est disposée entre ladite couche de structure de support à force (18) et ladite couche chauffante à infrarouges lointains en fibre de carbone (13) ; ladite couche de structure de support d'isolation (16) est fixée sur ladite couche de structure de support à force (18) via une couche de connexion (17)e t ladite électrode (4)est disposée sur un côté de ladite couche chauffante à infrarouges lointains en fibre de carbone (13) opposé à ladite couche de structure de support d'isolation (16).

4. Pièce de plancher surélevé électrothermique à infrarouges selon la revendication 3, **caractérisée en ce que** une couche de réflexion à infrarouges lointains (15) est disposée entre ladite couche chauffante à infrarouges lointains en fibre de carbone (13) et ladite couche de structure de support d'isolation (16).

5. Pièce de plancher surélevé électrothermique à infrarouges selon une quelconque des revendications précédentes, **caractérisée en ce que** ladite couche de plateau est un plateau décoratif ignifuge ou une plaque de bois fixée sur ladite couche chauffante à infrarouges lointains en fibre de carbone (13) via une couche adhésive (12).

6. Pièce de plancher surélevé électrothermique à infrarouges selon une quelconque des revendications précédentes, **caractérisée en ce que** une couche de protection (19) est disposée à la base de ladite couche de structure de support à force (18).

7. Pièce de plancher surélevé électrothermique à infrarouges selon la revendication 6, **caractérisée en ce que** un joint d'étanchéité (5) est disposé autour de ladite pièce de plancher surélevé électrothermique à infrarouges (1) ; et ladite couche de plateau (11), ledit joint d'étanchéité (5) et ladite couche de protection (19) sont constitués de matériaux anti-électrostatiques.

8. Pièce de plancher surélevé électrothermique à infrarouges selon une quelconque des revendications précédentes, **caractérisé en ce que** ladite borne de connexion à une ligne d'alimentation électrique (7) est connectée à une alimentation électrique externe via un dispositif de commande et d'ajustement de température (6) ; et une prise électrique (3) est disposée sur la pièce de plancher surélevé électrothermique à infrarouges (1).

9. Pièce de plancher surélevé électrothermique à infrarouges selon une quelconque des revendications précédentes, **caractérisée en ce que** lesdites bornes de connexion à une ligne d'alimentation électrique (7) comprennent une paire de bornes de connexion d'entrée à une ligne d'alimentation électrique (71) et une paire de bornes de connexion de sortie à une ligne d' alimentation électrique (72).

10. Plancher surélevé électrothermique à infrarouges comprenant une pluralité de pièces de plancher surélevé électrothermique à infrarouges (1) selon une quelconque des revendications précédentes, **caractérisé en ce que** lesdites pièces de plancher surélevé électrothermique à infrarouges (1) sont connectées les unes aux autres via lesdites bornes de connexion d'entrée à une ligne d'alimentation électrique (71) et lesdites bornes de connexion de sortie à une ligne d' alimentation électrique (72).

11. Plancher surélevé électrothermique à infrarouges comprenant une pluralité de pièces de plancher surélevé électrothermique à infrarouges (1) selon une quelconque des revendications précédentes, **caractérisé en ce que** le plancher est surélevé et installé sur une structure de support (2), la structure de support comprenant une traverse (8), une poutrelle longitudinale (9) et un piédestal de support (10).
